# EUROPÄISCHE PATENTANMELDUNG

(11) **EP 2 578 770 A1**
(43) Veröffentlichungstag der Anmeldung: **10.04.2013**
(21) Anmeldenummer: 12193783.3
(22) Anmeldetag: 22.11.2012
(51) Int. Cl.: E04F 15/04, C08G 18/28

(54) **Bodenaufbau umfassend einen parkettbelag**

(71) Anmelder: Construction Research & Technology GmbH, 83308 Trostberg (DE)
(72) Erfinder: Zimmermann, Jörg, 86420 Diedorf (DE)

(57) **Zusammenfassung**

Die Erfindung betrifft einen Bodenaufbau umfassend
A) eine flexible Abdichtungsbahn,
B) einem Kleber auf Basis eines organischen Prepolymeren P mit mindestens zwei durch Wasser vernetzbaren Organosilicium-Endgruppen, der Formel (I),

-Y-R¹-Si(R³)ₙ(OR²)₃₋ₙ (I)

wobei Y repräsentiert wird durch eine bivalente Bindegruppe, R¹ repräsentiert wird durch eine divalente Kohlenwasserstoffeinheit mit 1 bis 10 Kohlenstoffatomen, OR² gleich oder verschieden und unabhängig voneinander repräsentiert wird durch eine Alkoxygruppe, wobei R² eine Alkylgruppe mit 1 bis 10 Kohlenstoffatomen darstellt und/oder OR² eine Phenoxygruppe, eine Naphtyloxygruppe, eine Phenoxygruppe, welche an der ortho-, metha- und/oder para-Position substituiert ist, mit einer C₁-C₂₀ Alkyl-, Alkylaryl-, Alkoxy-, Phenyl-, substituierten Phenyl-, Thioalkyl-, Nitro-, Halogen-, Nitril-, Carboxyalkyl-, Carboxyamid-, -NH₂ und/oder NHR⁴-Gruppe, worin R⁴ eine lineare, verzweigte oder zyklische C₁-C₂₀ Alkylgruppe darstellt, R³ gleich oder verschieden und unabhängig voneinander repräsentiert wird durch eine Alkyl, Alkenyl, Arylen, Arylalkyl oder Alkylaryl mit jeweils 1 bis 15 Kohlenstoffatomen, wobei die Reste Sauerstoff- und/oder Schwefel- und/oder Stickstoffatome enthalten können, n repräsentiert wird durch 0, 1 oder 2, und
C) einen Parkettbelag.

## Beschreibung

Die Erfindung betrifft einen Bodenaufbau zum Schutz des Untergrundes vor Feuchtigkeit umfassend einen Parkettbelag und ein Abdichtungssystem. Das Abdichtungssystem umfasst eine flexiblen Abdichtungsbahn und einem Kleber auf Basis eines organischen Prepolymeren P mit mindestens zwei durch Wasser vernetzbaren Organosilicium-Endgruppen. Zur Abdichtung des Boden-Wand Übergangsbereichs wird ggf. ein Dichtband eingesetzt.

Parkett ist nicht nur aufgrund seiner repräsentativen Optik für die unterschiedlichsten Räume ein gefragter Bodenbelag. Seine Fußwärme und das damit einhergehende angenehme Barfußlaufen lassen viele Bauherren mittlerweile nicht mehr nur im Wohnbereich auf diesen hochwertigen Belag setzen, sondern machen ihn auch im Badezimmer und Wellnessbereich immer beliebter.
Bei der Verlegung von Parkett in diesen Bereichen ist neben der Wahl einer geeigneten Holzart ("gutmütige" Hölzer wie z. B. Merbau, Doussie, Teak oder Eiche mit langen Feuchtewechselzeiten) und die richtige Formatwahl jedoch entscheidend, auf eine fachgerechte Verlegung Wert zu legen, um eine lange Funktionsfähigkeit zu gewährleisten und Schäden zu vermeiden. So ist insbesondere auch dem Schutz des Untergrundes bzw. der Bausubstanz zu achten. Insbesondere bei der Verlegung von Parkett auf feuchteempfindlichen Untergründen wie Anhydritestriche oder Gipskartonplatten sind besondere Maßnahmen durchzuführen. Eine geeignete Maßnahme stellt hier der Schutz gegen eindringende Feuchtigkeit durch das Integrieren einer entsprechenden Abdichtung in den Fußbodenaufbau dar.

Eine Abdichtung ist eine bauliche Maßnahme, die das Bauwerk vor Schäden durch eindringendes Wasser schützen soll. Sie muss überall dort eingebaut werden, wo planmäßig das Einwirken von Wasser auftritt.
Eine Abdichtung muss wasserdicht sein und darüber hinaus auch schmale Risse überbrücken können, was sich über spezielle Prüfungen nachweisen lässt. Aber nicht nur die Fläche, sondern auch Anschlüsse oder Bauteilecken müssen zuverlässig dicht sein. Daher werden für eine funktionierende Bauteilabdichtung aufeinander abgestimmte Produkte in einem System in der Praxis bevorzugt.

Abdichtungen werden heute fast ausschließlich unter keramischen Fliesen bzw. Naturstein bei der Anwendung in Feuchträumen wie Bädern und Duschen eingesetzt. Bei planmäßig durch Feuchtigkeit beanspruchten Flächen ist dabei das wichtigste Unterscheidungsmerkmal das Ausmaß der erwarteten Feuchtebeanspruchung. In diesem Zusammenhang wurde die zu erwartende Nass-Belastung in Beanspruchungsklassen eingeteilt, die in verschiedenen Regelwerken spezifiziert sind.
Sind von den Abdichtungsmaßnahmen auch tragende Bauteile zu schützen, ist ein Eignungsnachweis, in der Regel ein bauaufsichtliches Prüfzeugnis, für die Abdichtungsmaßnahme nachzuweisen. Hochbelastete, bauaufsichtlich relevante Flächen werden über die Bauregelliste des DIBT geregelt. Hochbelastete Flächen, wie etwa Bodenflächen in öffentlichen Schwimmbädern oder Duschen, sind immer bauaufsichtlich geregelt. Mäßig belastete Flächen, wie z.B. Bäder im Privatbereich oder in Hotelzimmern, unterliegen nicht der Bauaufsicht; auch dort ist es jedoch Stand der Technik, dass abhängig von der Höhe der Belastung und der Beschaffenheit des Untergrundes eine geeignete Abdichtung aufgebracht wird.
Für wenig feuchtebelastete, also nicht bauaufsichtlich relevante, Flächen stellt die ZDB-Richtlinie "Verbundabdichtungen" den Stand der Technik dar. Beide Regelwerke beziehen sich jedoch ausschließlich auf den Verbund mit Fliesen und Platten. Da immer öfter auch Parkett in Bädern und Wellnessbereichen verlegt wird, ist das Thema Abdichtung im Verbund mit Parkett nun auch im Fokus des Parkettlegers angelangt.
Für Parkett als Oberbelag im hoch belasteten Bereich gibt es keine bauaufsichtliche Regelung. Wird Parkett hier als Oberbelag verlegt, was z.B. bei Hotelschwimmbädern zunehmend Anhänger gewinnt, ist es Stand der Technik die Abdichtungsmaßnahme gemeinsam mit dem Hersteller der Verlegewerkstoffe unter Einbeziehung des bestehenden Regelwerks für keramische Fliesen und Platten zu planen. Für mäßige Beanspruchungen stellt das seit 2007 bestehende BEB-Merkblatt "Abdichtungsstoffe im Verbund mit Bodenbelägen" den Stand der Technik dar, dem der Parkettleger unbedingt folgen sollte. Geeignete Bodenaufbauten für die Verlegung von Parkett in feuchtebelasteten Bereichen, die zuverlässig den Untergrund vor Feuchtigkeit schützen, sind jedoch bis heute auf dem Markt nicht bekannt.

Für die Verklebung von Parkett stehen verschiedene Klebstoffklassen zur Verfügung. Feuchtigkeitshärtende Klebstoffe spielen seit Jahren eine bedeutende Rolle bei zahlreichen technischen Anwendungen. Klebstoffe auf Basis von silylierten Polyurethanen, z.B. SPUR^{®}-Polymere der Momentive Performance Materials Inc., Desmoseal^{®} der Bayer Material Science AG, silylierten Polyharnstoffen; silyl-terminierten Polyethern z.B. MS-Polymer^{®} der Kaneka Corp., ST Polymere der Hanse Chemie AG sowie α,ω-silyl-terminierten Acrylaten, bzw. Arcylat-Telechele, z.B. X-MAP^{®} der Kaneka Corp. und silylierten Polysulfiden weisen ein sehr breites Anwendungsspektrum auf und werden in dem jeweiligen Einsatzzweck angepassten Formulierungen eingesetzt. Diese Klebstoffe zeichnen sich durch ein breites Haftspektrum auf einer Vielzahl von Substraten ohne Oberflächenvorbehandlung durch Primer aus. Die Einsatzgebiete liegen insbesondere im Hoch- und Tiefbau, in der Flugzeug- oder Fahrzeugindustrie und im Schiffbau sowie im Verkleben von Fußbodenbelägen, insbesondere Parkettbelägen.

Aufgabe der vorliegenden Erfindung war es somit, einen Bodenaufbau mit dem Oberbelag Parkett bereitzustellen, welcher den Untergrund bzw. die Bausubstanz zuverlässig vor Schäden durch Feuchteeinwirkung schützt.

Die Aufgabe wurde gelöst durch einen Bodenaufbau umfassend
A) eine flexible Abdichtungsbahn,
B) einem Kleber auf Basis eines organischen Prepolymeren P mit mindestens zwei durch Wasser vernetzbaren Organosilicium-Endgruppen, der Formel (I),

   -Y-R¹-Si(R³)ₙ(OR²)₃₋ₙ (I)

   wobei
   - Y: repräsentiert wird durch eine bivalente Bindegruppe
   - R¹: repräsentiert wird durch eine divalente Kohlenwasserstoffeinheit mit 1 bis 10 Kohlenstoffatomen,
   - OR²: gleich oder verschieden und unabhängig voneinander repräsentiert wird durch eine Alkoxygruppe, wobei R² eine Alkylgruppe mit 1 bis 10 Kohlenstoffatomen darstellt und/oder OR² eine Phenoxygruppe, eine Naphtyloxygruppe, eine Phenoxygruppe, welche an der ortho-, metha- und/oder para-Position substituiert ist, mit einer C₁-C₂₀ Alkyl-, Alkylaryl-, Alkoxy-, Phenyl-, substituierten Phenyl-, Thioalkyl-, Nitro-, Halogen-, Nitril-, Carboxyalkyl-, Carboxyamid-, -NH₂ und/oder NHR⁴-Gruppe, worin R⁴ eine lineare, verzweigte oder zyklische C₁-C₂₀ Alkylgruppe darstellt,
   - R³: gleich oder verschieden und unabhängig voneinander repräsentiert wird durch eine Alkyl, Alkenyl, Arylen, Arylalkyl oder Alkylaryl mit jeweils 1 bis 15 Kohlenstoffatomen, wobei die Reste Sauerstoff- und/oder Schwefel- und/oder Stickstoffatome enthalten können,
   - n: repräsentiert wird durch 0, 1 oder 2, und
C) einen Parkettbelag.

Besonders bevorzugt wird Y repräsentiert durch -N(C=O)-, -NR-, -NH-, -O-, -S- oder Organopolysiloxan, wobei R insbesondere eine Alkylgruppe oder Arylgruppe mit ein bis 20 Kohlenstoffatomen darstellen kann. Weiterhin wird n bevorzugt durch 0 oder 1 repräsentiert.

Die erfindungsgemäßen organischen Prepolymere P mit zwei durch Wasser vernetzbaren Organosilicium-Endgruppen der Formel (I), werden insbesondere durch Umsetzung von entsprechenden Prepolymeren mit geeigneten Silylierungsmitteln erhalten. Hierbei eignen sich als Silylierungsmittel insbesondere
1. primäre und/oder sekundäre Aminoalkoxysilane; α oder Y Stellung
   z. B. H₂N-CH₂-Si(OR²)₃
      H₂N-(CH₂)₃-Si(OR²)₃
      RNH-(CH₂)₃-Si(OR²)₃
      RNH-CH₂-CHMe-CH₂-Si(OR²)₃
   wobei R eine eine Alkylgruppe oder Arylgruppe mit ein bis 20 Kohlenstoffatomen, insbesondere Methyl-, Ethyl-, iso-Propyl-, n-Propyl, Butylgruppe (n-, iso-, sec-), Cyclohexyl, Phenyl und Naphthyl darstellt,
2. Isocyanatoalkoxysilane; α oder Y Stellung
3. Produkte erhalten durch Michael Addition primärer Aminoalkoxysilane in α- und Y-Stellung und Ringschluss zum Hydantoin, z.B. US 5364955.
Es können aber auch Mischungen aus mindestens zwei der genannten Verbindungen im Prepolymer P vorhanden sein.

In einer bevorzugten Ausführungsform sind als Silylierungsmittel-Komponente insbesondere Aminogruppen oder Isocyanatgruppen enthaltende Alkoxysilane von Interesse. Als Aminogruppen enthaltende Alkoxysilane sind insbesondere Verbindungen geeignet, welche ausgewählt sind aus der Gruppe 3-Aminopropyl-trimethoxysilan, 3-Aminopropyl-triethoxysilan, 3-Aminopropyl-methyldimethoxysilan, 3-Aminopropylmethyldiethoxysilan, 3-Amino-2-methylpropyl-trimethoxysilan, 4-Aminobutyltrimethoxysilan, 4-Aminobutyl-methyldimethoxysilan, 4-Amino-3-methylbutyltrimethoxysilan, 4-Amino-3,3-dimethylbutyl-trimethoxysilan, 4- Amino-3,3-dimethylbutyldimethoxymethylsilan, Aminomethyl-trimethoxysilan, Aminomethyl-dimethoxymethylsilan, Aminomethylmethoxydimethylsilan, Aminomethyl-triethoxysilan, Aminomethyl-diethoxymethylsilan, Aminomethyl-ethoxydimethylsilan, N-Methyl-3-aminopropyl-trimethoxysilan, N-Methyl-3-aminopropyl-dimethoxymethylsilan, N-Ethyl-3-aminopropyl-trimethoxysilan, N-Ethyl-3-aminopropyl-dimethoxymethylsilan, N-Butyl-3-aminopropyl-trimethoxysilan, N-Butyl-3- aminopropyl-dimethoxymethylsilan, N-Cyclohexyl-3-aminopropyl-trimethoxysilan, N-Cyclohexylaminomethyltriethoxysilan, Cyclohexylaminomethyltrimethoxysilan, N- Phenyl-3-aminopropyl-trimethoxysilan, N-Methyl-3-amino-2-methylpropyl-tri- methoxysilan, N-Methyl-3-amino-2-methylpropyl-dimethoxymethylsilan, N-Ethyl-3-amino-2-methylpropyl-trimethoxysilan, N-Ethyl-3-amino-2-methylpropyl-dimethoxymethylsilan, N-Ethyl-3-aminopropyl-dimethoxy-methylsilan, N-Ethyl-3-aminopropyl-trimethoxysilan, N-Phenyl-4-aminobutyl-trimethoxysilan, N-Phenyl-aminomethyl-dimethoxymethylsilan, N- Phenyl-aminomethyl-trimethoxysilan, N-Cyclohexyl-aminomethyl-di-methoxymethylsilan, N-Cyclohexyl-aminomethyl-trimethoxysilan, N-Methyl-aminomethyl-dimethoxymethylsilan, N-Methyl-aminomethyl-trimethoxysilan, N-Ethyl-aminomethyl-dimethoxymethylsilan, N-Ethyl-aminomethyl-trimethoxysilan, N-Propyl-aminomethyl-dimethoxymethylsilan, N-Propyl-aminomethyl-trimethoxysilan, N-Butyl-aminomethyl-dimethoxymethylsilan, N-Butyl-aminomethyl-trimethoxysilan, N-(2-Aminoethyl)-3-amino-propyl-trimethoxysilan, N-(2-Aminoethyl)-3-amino-propyl-methyldimethoxysilan, 3-[2-(2-Aminoethylamino)-ethylamino]-propyltrimethoxysilan, Bis(trimethoxysilylpropyl)amin, Bis(dimethoxy(methyl)silylpropyl)amin, Bis(trimethoxysilylmethyl)amin, Bis(dimethoxy(methyl)silylmethyl)amin, 3-Ureidopropyltrimethoxysilan, N-Methyl[3-(Trimethoxysilyl)-propyl]carbamate, N-Trimethoxysilylmethyl-O-methylcarbamat, N-Dimethoxy(methyl)silyl-methyl-carbamat sowie deren Analoga mit Ethoxy- oder Isopropoxygruppen oder n-Propoxygruppen oder n-Butoxygruppen oder iso-Butoxygruppen oder sec.-Butoxygruppen anstelle der Methoxygruppen am Silicium.

Als Isocyanatgruppen enthaltende Alkoxysilane sind insbesondere Verbindungen geeignet, welche ausgewählt sind aus der Gruppe bestehend aus Isocyanatopropy-Itriethoxysilan, Isocyanatopropyltrimethoxysilan, Isocyanatopropylmethyldiethoxysilan, Isocyanatopropylmethyldimethoxysilan, Isocyanatomethyltrimethoxysilan, Isocyanatomethyltriethoxysilan, Isocyanatomethylmethyldiethoxysilan, Isocyanatomethylmethyldimethoxysilan, Isocyanatomethyldimethylmethoxysilan oder Isocyanatomethyldimethylethoxysilan, sowie deren Analoga mit Isopropoxy- oder n-Propoxygruppen.

Bei dem organischen Prepolymeren P kann es sich bevorzugt um mindestens eine Polymerverbindung auf Basis von Acrylaten, Polyurethanen, Polyharnstoffen, Polyethern und Polyestern handeln. Die Prepolymere können darüber hinaus auch Polyorganosiloxan-blöcke enthalten, die beispielsweise eingebaut werden durch Hydrosilylierung von H-terminierten Polyorganosiloxanen an Vinyl-Gruppen tragende Polymerbausteine. Weiterhin können die Polyorganosiloxane reaktive Gruppen enthalten, über welche das Polyorganosiloxan kovalent in das organische Prepolymer P eingebaut ist. Bevorzugte reaktive Gruppen sind hier primäre und sekundäre Aminogruppen, Hydroxygruppen, Carboxy- und Epoxygruppen, Trialkoxysilane sowie (Meth)acrylatgruppen.

Handelt es sich bei dem Grundgerüst der organischen Prepolymeren P um Polyurethane und Polyharnstoffe sind diese aus mindestens einer Polyol- bzw. Polyamin-Komponente sowie einer Polyisocyanatkomponente aufgebaut und können optional Kettenverlängerer enthalten.

Die Herstellungsweise der Polyurethan- oder Polyharnstoff-Prepolymere ist für die vorliegende Erfindung nicht kritisch. Es kann sich somit um einen einstufigen Prozess handeln, wobei die Polyole und/oder Polyamine, Polyisocyanate und Kettenverlängerer gleichzeitig miteinander zur Reaktion gebracht werden, was bspw. in einer Batch-Reaktion geschehen kann, oder es kann sich um einen zweistufigen Prozess handeln, in dem bspw. zunächst ein Prepolymer gebildet wird, welches im Anschluss mit Kettenverlängerern zur Reaktion gebracht wird.

Die Polyurethane oder Polyharnstoffe können auch noch weitere Struktureinheiten enthalten, insbesondere kann es sich hierbei um Allophanate, Biuret, Uretdion oder Cyanurate handeln. Die vorgenannten Gruppen sind allerdings nur Beispiele, wobei die erfindungsgemäßen Polyurethane und Polyharnstoffe auch weitere Struktureinheiten enthalten können. Auch der Grad der Verzweigung ist für die vorliegende Erfindung unkritisch, so dass sowohl lineare als auch hochverzweigte Polymere eingesetzt werden können.

In einer bevorzugten Ausführungsform der Erfindung beträgt das molare Verhältnis der im Polymer enthaltenen Isocyanat-Komponente zu der Summe der Polyol- bzw. Polyamin-Komponente 0,01 bis 50, bevorzugt 0,5 bis 1,8.

Bei der Isocyanat-Komponente handelt es sich bevorzugt um eine aliphatische, cycloaliphatische, araliphatische und/oder aromatische Verbindung, bevorzugt um ein Diisocyanat oder Triisocyanat, wobei es sich auch um Mischungen dieser Verbindungen handeln kann. Hierbei ist es als bevorzugt anzusehen, dass es sich um Hexamethylendiisocyanat-1,6 (HDI), HDI Dimer, HDI Trimer, 1-Isocyanato-3,3,5-trimethyl-5-isocyanatomethylcyclohexan (IPDI), 2,4- und/oder 2,6-Toluylendiisocyanat (TDI) und/oder 4,4'-, 2,4'- und/oder 2,2'-Diphenylmethandiisocyanat (MDI), Polymeres MDI, Carbodiimid-modifiziertes 4,4'-MDI, m-Xylylendüsocyanat (MXDI), m- oder p-Tetramethylxylylendiisocyanat (m-TMXDI, p-TMXDI), 4,4'-Dicyclohexylmethandiisocyanat (H12MD1), Naphthalin-1,5-Diisocyanat, Cyclohexan-1,4-diisocyanat, hydriertes Xylylen-diisocyanat (H6XD1), 1-Methyl-2,4-diisocyanatocyclohexan, Tetramethoxybutan-1,4-diisocyanat, Butan-1,4-diisocyanat, 1,6-Diisocyanato-2,2,4-trimethylhexan, 1,6-Diisocyanato-2,4,4-trimethylhexan, 1-Isocyanato-1-methyl-4(3)-isocyanatomethylcyclohexan (IMCI) sowie 1,12-Dodecandiisocyanat (C12DI) handelt. Weiterhin kann es sich um 4-Dichlorophenyl diisocyanat, Dicyclohexylmethan-4,4'-diisocyanat, m-Phenylendiisocyanat, p-Phenylendiisocyanat, 4-Chloro-1,3-phenylendiisocyanat, 1,6-Hexamethylendiisocyanat, 1,10-Decamethylenediisocyanat, Lysinalkylesterdiisocyanat, 3,3'-Dimethyl-4,4'-diphenylmethandiisocyanat, Xylylendiisocyanat, Tetramethylxylylendiisocyanat, 1,5-Tetrahydronaphthalendiisocyanat, Triisocyanatotoluol, Methylenbis(cyclohexyl)-2,4'-diisocyanat und 4-Methylcyclohexan-1,3-diisocyanat handeln. Insbesondere sind Polyisocyanate mit zwei oder drei Isocyanatgruppen pro Molekül geeignet. Es kann sich aber auch um Mischungen von Polyisocyanaten handeln, wobei die durchschnittliche Anzahl der Isocyanatgruppen in der Mischung insbesondere bei 2,1 bis 2,3, 2,2 bis 2,4 oder 2,6 bis 2,8 liegen kann. Derivatisierte Polyisocyanate können ebenfalls verwendet werden, beispielsweise sulfonierte Isocyanate, blockierte Isocyanate, Isocyanurate und Biuret-Isocyanate.

Bei der Polyol- bzw. Polyamin-Komponente handelt es sich bevorzugt um Polyetheresterpolyol, Polyetherpolyole, Polyesterpolyole, Polybutadienpolyole und Polycarbonatpolyole, wobei es sich auch um Mischungen dieser Verbindungen handeln kann. Die Polyole und/oder Polyamine enthalten bevorzugt zwischen zwei und 10, besonders bevorzugt zwischen zwei und drei Hydroxylgruppen und/oder Aminogruppen und besitzen ein gewichtsmittleres Molekulargewicht zwischen 32 und 30000, besonders bevorzugt zwischen 90 und 18000 g/mol. Als Polyole eignen sich vorzugsweise die bei Raumtemperatur flüssigen, glasartig fest/amorphen oder kristallinen Polyhydroxyverbindungen. Als typische Beispiele wären difunktionelle Polypropylenglykole zu nennen. Es können auch bevorzugt Hydroxylgruppen aufweisende statistische Copolymere und/oder Blockcopolymere des Ethylenoxids und Propylenoxids eingesetzt werden. Geeignete Polyetherpolyole sind die in der Polyurethanchemie an sich bekannten Polyether, wie die unter Verwendung von Startermolekülen hergestellten Polyole mittels KOH- oder DMC- Katalyse aus Styroloxid, Ethylenoxid, Propylenoxid, Butylenoxid, Tetrahydrofuran oder Epichlorhydrin.

Konkret eignen sich insbesondere auch Poly(oxytetramethylen)glykol (Poly-THF), 1,2-Polybutylenglykol, oder deren Mischungen. Insbesondere geeignet sind Polypropylenoxid, Polyethylenoxid und Butylenoxid und deren Mischungen. Ein weiterer als Polyolkomponente einsetzbarer Copolymertyp, der endständig Hydroxylgruppen aufweist, ist gemäß der allgemeinen Formel (herstellbar z.B. mittels "Controlled" High-Speed Anionic Polymerization gemäß Macromolecules 2004, 37, 4038-4043): 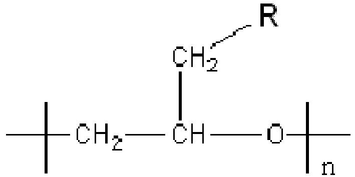 in welcher R gleich oder verschieden ist und bevorzugt durch OMe, OiPr, Cl oder Br repräsentiert wird.

Weiterhin eignen sich als Polyol-Komponente insbesondere die bei 25°C flüssigen, glasartig amorphen oder kristallinen Polyesterdi- bzw. polyole, die durch Kondensation von Di- oder Tricarbonsäuren, wie Adipinsäure, Sebacinsäure, Glutarsäure, Azelainsäure, Korksäure, Undecandisäure, Dodecandisäure, 3,3-Dimethylglutarsäure, Terephthalsäure, Isophthalsäure, Hexahydrophthalsäure und/oder Dimerfettsäure, mit niedermolekularen Diolen, Triolen oder Polyolen, wie Ethylenglykol, Propylenglykol, Diethylenglykol, Triethylenglykol, Dipropylenglykol, 1,4-Butandiol, 1,6-Hexandiol, 1,8-Octandiol, 1,10-Decandiol, 1,12-Dodecandiol, Dimerfettalkohol, Glycerin, Pentaerythritol und/ oder Trimethylolpropan, herstellbar sind.

Eine weitere geeignete Gruppe der Polyole sind die Polyester z.B. auf der Basis von Caprolacton, welche auch als "Polycaprolactone" bezeichnet werden. Weitere einsetzbare Polyole sind Polycarbonat-Polyole und Dimerdiole sowie Polyole auf Basis pflanzlicher Öle und ihrer Derivate, wie Rizinusöl und dessen Derivate oder epoxidiertes Sojabohnenöl. Außerdem kommen Hydroxylgruppen aufweisende Polycarbonate in Frage, welche durch Reaktion von Kohlensäurederivaten, z. B. Diphenylcarbonat, Dimethylcarbonat oder Phosgen, mit Diolen erhältlich sind. Besonders eignen sich z.B. Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A, Tetrabrombisphenol A, Glyzerin, Trimethylolpropan, 1,2,6-Hexantriol, 1,2,4-Butantriol, Trimethylolpropan, Pentaerythrit, Chinit, Mannit, Sorbit, Methylglykosid und 1,3,4,6-Dianhydrohexite. Auch die Hydroxy-funktionellen Polybutadiene, welche u.a. unter dem Handelsnamen "Poly-bd®" käuflich sind, können als Polyol-Komponente ebenso wie deren hydrierten Analoga dienen. Weiterhin kommen Hydroxy-funktionelle Polysulfide, welche unter dem Handelsnamen "Thiokol® NPS-282" vertrieben werden, sowie hydroxy-funktionelle Polysiloxane in Frage.

Als erfindungsgemäß einsetzbare Polyamin-Komponente eignen sich insbesondere Hydrazin, Hydrazinhydrat und substituierte Hydrazine, wie N-Methylhydrazin, N,N'-Dimethylhydrazin, Säurehydrazide der Adipinsäure, Methyladipinsäure, Sebacinsäure, Hydracrylsäure, Terephthalsäure, Semicarbazidoalkylen-hydrazide, wie 13-Semicarbazidopropionsäurehydrazid, Semicarbazidoalkylen-carbazinester, wie z. B. 2-Semicarbazidoethyl-carbazinester und/ oder Aminosemicarbazid-Verbindungen, wie 13-Aminoethylsemicarbazidocarbonat. Weiterhin eignen sich zur Herstellung der Polyurethane und Polyharnstoffe Polyamine basierend auf Polyestern, Polyolefinen, Polyacetalen, Polythioethern, Polyethercarbonaten, Polyethyleneterephthalaten, Polyesteramiden, Polycaprolactamen, Polycarbonaten, Polycaprolactonen und Polyacrylaten, welche mindestens zwei Amingruppen aufweisen. Polyamine, z.B. solche, die unter dem Handelsnamen Jeffamine® (es handelt sich um Polyetherpolyamine) vertrieben werden, sind auch geeignet.

Als Polyol-Komponente und/oder Polyamin-Komponente kommen auch die als sogenannte Kettenverlänger bekannten Spezies in Frage, welche bei der Herstellung von Polyurethanen und Polyharnstoffen mit überschüssigen Isocyanatgruppen reagieren, normalerweise ein Molekulargewicht (Mn) von unter 400 aufweisen und häufig in Form von Polyolen, Aminopolyolen oder aliphatischen, cycloaliphatischen oder araliphatischen Polyaminen vorliegen.

Geeignete Kettenverlängerer sind beispielsweise:
- Alkandiole, wie Ethandiol, 1,2- und 1,3-Propandiol, 1,4- und 2,3-Butandiol, 1,5-Pentandiol, 1,3-Dimethylpropandiol, 1,6-Hexandiol, Neopentylglykol, Cyclohexandimethanol, 2-Methyl-1,3-propandiol, Hexylenglykol, 2,5-Dimethyl-2,5-hexanediol, Ethylenglycol, 1,2- oder 1,3-Propandiol, 1,2-, 1,3- oder 1,4-Butandiol, 1,2-, 1,3-, 1,4- oder 1,5-Pentandiol, 1,2-, 1,3-, 1,4-, 1,5- or 1,6-Hexandiol, Neopentylhydroxypivalat, Neopentylglycol, Dipropyleneglycol, Diethyleneglycol, 1,2-, 1,3- oder 1,4-Cyclohexandiol, 1,2-, 1,3- oder 1,4-Cyclohexandimethanol, Trimethylpentandiol, Ethylbutylpropandiol, Diethyloctandiole, 2-Butyl-2-ethyl-1,3-propandiol, 2-Butyl-2-methyl-1,3-propandiol, 2-Phenyl-2-methyl-1,3-propandiol, 2-Propyl-2-ethyl-1,3-propanediol, 2-Di-tert-butyl-1,3-propandiol, 2-Butyl-2-propyl-1,3-propandiol, 1-Dihydroxymethylbicyclo[2.2.1]heptan, 2,2-Diethyl-1,3-propanediol, 2,2-Dipropyl-1,3-propandiol, 2-Cyclohexyl-2-methyl-1,3-propandiol, 2,5-Dimethyl-2,5-hexanediol, 2,5-Diethyl-2,5-hexandiol, 2-Ethyl-5-methyl-2,5-hexanediol, 2,4-Dimethyl-2,4-pentandiol, 2,3-Dimethyl-2,3-butandiol, 1,4-Bis(2'-hydroxypropyl)benzol, und 1,3-Bis(2'-hydroxypropyl)benzol und
- δ-Hydroxybutyl-ε-hydroxy-capronsäureester, ω-Hydroxyhexyl-y-hydroxybuttersäureester, Adipinsäure-(β-hydroxyethyl)-ester oder Terephthalsäure-bis-(β-hydroxyethyl)-ester und
- Aliphatische Diamine, aromatische Diamine und alicyclische Diamine, insbesondere Methylenediamin, Ethylendiamin, 1,2- und 1,3-Diaminopropan, 1,4-Diaminobutan, Cadaverin (1,5-Diaminopentan), 1,6-Hexamethylendiamin, Isophorondiamin, Piperazin, 1,4-Cyclohexyldimethylamin, 4,4'-Diaminodicyclohexylmethan, Aminoethylethanolamin, 2,2,4-Trimethylhexamethylendiamin, 2,4,4-Trimethylhexamethylendiamin, Octamethylendiamin, m- or p-Phenylendiamin, 1,3- oder 1,4-Xylylendiamin, hydriertes Xylylendiamin, Bis(4-aminocyclohexyl)methan, 4,4'-Methylen-bis-(ortho-chloroanilin), Di-(methylthio)-toluoldiamin, Diethyltoluoldiamin, N,N'-Dibutylamindiphenylmethan, Bis-(4-amino-3-methylcyclohexyl)methan, Isomerengemische von 2,2,4- und 2,4,4-Trimethyl-hexamethylendiamin, 2-Methyl-pentamethylendiamin, Diethylentriamin, und 4,4- Diaminodicyclohexylmethan sowie
- Ethanolamin, Hydrazinethanol, 2-[(2-Aminoethyl)amino]ethanol.

Schließlich soll erwähnt sein, dass die Polyol-Komponente und/oder Polyamin-Komponente Doppelbindungen enthalten können, welche z.B. aus langkettigen, aliphatischen Carbonsäuren oder Fettalkoholen resultieren können. Eine Funktionalisierung mit olefinischen Doppelbindungen ist z. B. auch durch den Einbau vinylischer oder allylischer Gruppen möglich. Diese können beispielsweise von ungesättigten Säuren wie Maleinsäureanhydrid, Acrylsäure oder Methacrylsäure sowie deren jeweiligen Estern stammen.

Bevorzugt im Sinne der Erfindung ist es, dass es sich bei der Polyol-Komponente und/oder Polyamin-Komponente um Polypropylendiol, Polypropylentriol, Polypropylenpolyol, Polyethylendiol, Polyethylentriol, Polyethylenpolyol, Polypropylendiamin, Polypropylentriamin, Polypropylenpolyamin, Poly-THF-diamin, Polybutadiendiol, Polyesterdiol, Polyestertriol, Polyesterpolyol, Polyesteretherdiol, Polyesterethertriol, Polyesteretherpolyol, besonders bevorzugt Polypropylendiol, Polypropylentriol, Poly-THF-diol, Polyhexandiolcarbamatdiol, Polycaprolactamdiol und Polycaprolactamtriol handelt. Weiterhin kann es sich auch um Mischungen der genannten Verbindungen handeln.

In einer besonders bevorzugten Ausführungsform enthalten die Polyurethane oder Polyharnstoffe Polyole mit einem Molekulargewicht zwischen 1000 und 18000, insbesondere 2000 bis 12000 und besonders bevorzugt 3000 bis 9000 g/mol. Bei diesen Polyolen handelt es sich besonders bevorzugt um Poly-THF-diol, Polypropylenglycol sowie statistische Copolymere und/oder Blockcopolymere des Ethylenoxids und Propylenoxids. Als bevorzugt haben sich hierbei die Polyetherpolyole erwiesen, welche durch KOH-Katalyse hergestellt wurden. In einer bevorzugten Ausführungsform werden als Kettenverlängerer Diole mit einem Molekulargewicht von 60 bis 500, insbesondere 85 bis 200 eingesetzt, wobei die Dioligomere von Glycolen besonders bevorzugt sind. Hinsichtlich der Eigenschaften der erfindungsgemäßen Zusammensetzungen ist es weiterhin besonders vorteilhaft, wenn die Polyurethane oder Polyharnstoffe 2,4-und/oder 2,6-Toluylendiisocyanat (TDI) und/oder 4,4'-, 2,4'- und/oder 2,2'-Diphenylmethandiisocyanat (MDI) enthalten, insbesondere Isomerengemische des TDI, wobei ein 2,4-Isomerenanteil von über 40% besonders bevorzugt ist.

Die Polyurethane oder Polyharnstoffe können auch Vernetzer-Komponenten, Kettenstopper-Komponenten und weitere reaktive Komponenten enthalten. Einige Vernetzer wurden bereits unter den Kettenverlängerern mit mindestens drei reaktiven Wasserstoffen aufgeführt. Insbesondere kann es sich um Glycerin, Tetra(2-hydroxypropyl)ethylendiamine, Pentaerythritol, Trimethylolpropen, Sorbitol, Sucrose, Triethanolamin und Polymere mit mindestens drei reaktiven Wasserstoffen handeln (z.B. Polyetheramine mit mindestens drei Amingruppen, polymere Triole usw.). Als Kettenstopper kommen insbesondere Verbindungen mit reaktiven Wasserstoffen in Frage, wie Monoole, Monoamine, Monothiole und Monocarbonsäuren. In einer speziellen Ausführungsform werden Monoole eingesetzt, wobei C₁- bis C₁₂-Alkohole (insbesondere Methanol bis Dodecylalkohol), höhere Alkohole, Polymere wie etwa Polyether und Polyester mit einer OH-Gruppe und Struktureinheiten wie Glycerin oder Saccharose, in denen alle bis auf eine OH- Gruppe umgesetzt wurden, wobei bei der Umsetzung keine weiteren reaktiven Wasserstoffe eingeführt wurden.

In einer besonders UV beständigen Variante werden als Polyolkomponente bevorzugt Polyester mit mindestens zwei OH-Gruppen, Polycarbonate mit mindestens zwei OH-Gruppen, Polycarbonatester mit mindestens zwei OH-Gruppen, PolyTHF, Polypropylenglykol, statistische Copolymere und/oder Blockcopolymere des Ethylenoxids und Propylenoxids eingesetzt.

Erfindungsgemäße Zusammensetzungen enthaltend Polyurethane können weiterhin Lichtschutzmittel enthalten, insbesondere vom Hals-Typ. Beispielhaft sei das 4-Amino-2,2,6,6-tetramethylpiperidin genannt.

Handelt es sich bei dem Grundgerüst des organischen Prepolymeren P um Acrylate sind hierunter Verbindungen zu verstehen, welche mindestens ein Monomer aus der Reihe der Acrylsäureester und Methacrylsäureester enthalten, wobei bevorzugt mindestens 70 Gew.-% des Polymers aus mindestens einer Verbindung der Reihe der Acrylsäureester, Methacrylsäureester und Styrole besteht.

Bei den Monomeren der Acrylat-Komponente handelt es sich bevorzugt um mindestens eine Verbindung aus der Reihe Ethyldiglycolacrylat, 4-tert. Butylcyclohexylacrylat, Dihydrocyclopentadienylacrylat, Lauryl(meth)acrylat, Phenoxyethylacrylat, Isobornyl(meth)acrylat, Dimethylaminoethylmethacrylat, Cyanoacrylate, Citraconat, Itaconat und deren Derivate, (Meth)acrylsäure, Methyl(meth)acrylat, Ethyl(meth)acrylat, n-Propyl(meth)acrylat, Isopropyl(meth)acrylat, n-Butyl(meth)acrylat, Isobutyl(meth)acrylat, tert-Butyl(meth)acrylat, n-Pentyl(meth)acrylat, n-Hexyl(meth)acrylat, Cyclohexyl(meth)acrylat, n-Heptyl(meth)acrylat, n-Octyl(meth)acrylat, 2-Propylheptylacrylat, 2-Ethylhexyl(meth)acrylat, Nonyl(meth)acrylat, Decyl(meth)acrylat, iso Decyl(meth)acrylat, Dodecyl(meth)acrylat, Phenyl(meth)acrylat, Toluyl(meth)acrylat, Benzyl(meth)acrylat, 2-Methoxyethyl(meth)acrylat, 3-Methoxybutyl(meth)acrylat, 2-Hydroxyethyl(meth)acrylat, 2-Hydroxypropyl(meth)acrylat, Stearyl(meth)acrylat, Glycidyl(meth)acrylat, 2-Aminoethyl(meth)acrylate, γ-(Methacryloyloxypropyl)trimethoxysilan, Ethyleneoxid Addukte von (Meth)acrylsäure, Trifluoromethylmethyl(meth)acrylat, 2-Trifluoromethylethyl(meth)acrylat, 2-Perfluoroethylethyl(meth)acrylat, 2-Perfluoroethyl-2-perfluorobutylethyl(meth)acrylat, 2-Perfluoroethyl(meth)acrylat, Perfluoromethyl(meth)acrylat, Diperfluoromethylmethyl(meth)acrylat, 2-Perfluoromethyl-2-perfluoroethylmethyl(meth)acrylat, 2-Perfluorohexylethyl(meth)acrylat, 2-Perfluorodecylethyl(meth)acrylat und 2-Perfluorohexadecylethyl(meth)acrylat.

In einer besonderen Ausführungsform handelt es sich um zwei oder mehrere Monomere aus der Reihe n-Butylacrylat, 2-Hydroxyethyl(meth)acrylat, Acrylsäure, Methacrylsäure und Methylmethacrylat.

In einer weiteren Ausführungsform werden Copolymere aus mindestens zwei aller vorgenannten Monomere eingesetzt, wobei das Verhältnis in der Form gewählt wird, dass die erhaltenen Copolymere die gewünschten anwendungstechnischen Eigenschaften für den jeweiligen Einsatzzweck aufweisen. Dem Fachmann sind geeignete Copolymere mit den gewünschten anwendungstechnischen Eigenschaften bekannt. Insbesondere sind für Klebstoffe Copolymere aus n-Butylacrylat und Methylmethacrylat bevorzugt, welche in einem molaren Verhältnis eingesetzt werden, in denen das erhaltene Copolymer eine Glasübergangstemperatur besitzt, welche zwischen denen der entsprechenden Homopolymere liegt. Insgesamt kann es sich bei den Acrylaten der vorliegenden Erfindung sowohl um Copolymer als auch um Homopolymere handeln.

Die Acrylsäure-Polymere können weiterhin auch andere ethylenisch ungesättigte Monomere enthalten. Als Beispiele seien hier mono- und polyungesättigte Kohlenwasserstoffmonomere, Vinylester (bspw. Vinylester von C₁- bis C₆-gesättigten Monocarbonsäuren), Vinylether, monoethylenisch ungesättigte Mono- und Polycarbonsäuren und Alkylester dieser Mono- und Polycarbonsäuren (bspw. Acrylsäureester und Methacrylsäureester wie etwa C₁- bis C₁₂-Alkyl und insbesondere C₁- bis C₄-Alkylester), Aminomonomere und Nitrile, Vinyl- und Alkylvinylidene und Amide von ungesättigten Carbonsäuren genannt. Weiterhin kommen ungesättigte Kohlenwasserstoff-Monomere umfassend Styrol-Verbindungen (bspw. Styrol, carboxyliertes Styrol und alpha-Methylstyrol), Ethylen, Propylen, Butylen und konjugierte Diene (Butadien, Isopren und Copolymere von Butadien und Isopren) in Frage. Bezüglich der Vinyl- und Halogenvinylidenmonomere seien Vinylchlorid, Vinylidenchlorid, Vinylfluorid und Vinylidenfluorid genannt. Beispiele für die Vinylester umfassen aliphatische Vinylester, wie etwa Vinylformat, Vinylacetat, Vinylpropionat, Vinylbutyrat, Vinylisobutyrat, Vinylvaleriat, Vinylcaproat und Allylester der gesättigten Monocarbonsäuren wie Allylacetat, Allylpropionat und Allyllactat. Hinsichtlich der Vinylether seien Methylvinylether, Ethylvinylether und N-Butylvinylether genannt. Typische Vinylketone umfassen Methylvinylketone, Ethylvinylketone und Isobutylvinylketone. Beispiele für die Dialkylester der monoethylenisch ungesättigten Dicarbonsäuren sind Dimethylmaleat, Diethylmaleat, Dibutylmaleat, Dioctylmaleat, Diisooctylmaleat, Dinonylmaleat, Diisodecylmaleat, Ditridecylmaleat, Dimethylfumarat, Diethylfumarat, Dipropylfumarat, Dibutylfumarat, Dioctylfumarat, Diisooctylfumarat, Didecylfumarat, Dimethylitaconat, Diethylitaconat, Dibutylitaconat und Dioctylitaconat. Insbesondere handelt es sich bei den monoethylenisch ungesättigten Monocarbonsäuren um Acrylsäure, Methacrylsäure, Ethacrylsäure und Crotonsäure. Bei den monoethylenisch ungesättigten Dicarbonsäuren seien Maleinsäure, Fumarsäure, Itaconsäure und Citronensäure genannt. Als monoethylenisch ungesättigte Tricarbonsäuren können im Hinblick auf die vorliegende Erfindung bspw. Aconitsäure und deren halogensubstituierte Derivate eingesetzt werden. Des Weiteren können die Anhydride und Ester der vorgenannten Säuren (bspw. Maleinsäureanhydrid und Citronensäureanhydrid) eingesetzt werden. Beispiele für Nitrile von ethylenisch ungesättigten Mono-, Di- und Tricarbonsäuren umfassen Acrylonitril, α-Chloracrylonitril und Methacrylonitril. Bei den Amiden der Carbonsäuren kann es sich um Acrylamide, Methacrylamide und andere α-substituierte Acrylamide und N-substituierte Amide bspw. N-Methylolacrylamid, N-Methylolmethylacrylamid, alkylierte N-Methylolacrylamide und N-Methylolmethacrylamide (bspw. N-Methoxymethylacrylamid und N-Methoxymethylmethacrylamid) handeln. Als Aminomonomere können substituierte und unsubstituierte Aminoalkylacrylate, Hydrochloridsalze der Aminomonomere und Methacrylate wie etwa β-Aminoethylacrylat, β-Aminoethylmethacrylat, Dimethylaminomethylacrylat, β-Methylaminoethylacrylat und Dimethylaminomethylmethacrylat eingesetzt werden. Im Rahmen der vorliegenden Erfindung seien hinsichtlich der kationischen Monomere α- und β-ethylenisch ungesättigte Verbindungen genannt, welche sich zur Polymerisation eignen und primäre, sekundäre oder tertiäre Aminogruppen enthalten, bspw. Dimethylaminoethylmethacrylat, Dimethylaminoneopentylacrylat, Dimethylaminopropylmethacrylat und tert.-Butylaminoethylmethacrylat oder organische und anorganische Salze dieser Verbindungen und/oder Alkylammonium-Verbindungen wie etwa Trimethylammoniumethylmethacrylatchlorid, Diallyldimethylammoniumchlorid, β-Acetamidodiethylaminoethylacrylatchlorid und Methaacrylamidopropyltrimethylammoniumchlorid. Diese kationischen Monomere können alleine oder in Kombination mit den vorgenannten weiteren Monomeren eingesetzt werden. Als Beispiele für hydroxyhaltige Monomere seien noch die β-Hydroxyethylacrylate, β-Hydroxypropylacrylate, γ-Hydroxypropylacrylate und β-Hydroxyethylmethacrylate genannt.

Die erfindungsgemäß einsetzbaren Polymere P auf Basis von Acrylaten sind aus mindestens einer Acrylat-Komponente und mindestens zwei Organosilicium-Endgruppen aufgebaut. Die Acrylate können beispielsweise aus der Umsetzung von alkenyl-terminierten Acrylaten durch Hydrosilylierung erhalten werden, wobei die alkenyl-terminierten Acrylate über Atom Transfer Radical Polymerization (ATRP) hergestellt werden können oder aus der Umsetzung von alkenyl-terminierten Acrylaten mit Organosilicium-Endgruppen enthaltenden Monomer, wobei die alkenyl-terminierten Acrylate über Atom Transfer Radical Polymerization (ATRP) hergestellt werden können.
Auch andere kontrollierte Radikalpolymerisationen wie NMP (Nitroxide-mediated Polymerisation), SET (Single electron transfer-Polymerisation) oder RAFT (Reversible Additions-Fragmentierungs Kettenübertragungs-Polymerisation) sind geeignet.

Werden die Organosilicium-Endgruppen durch Hydrosilylierung an die Acrylat-Komponente gebunden, so eignen sich Alkoxysilan-Verbindungen, insbesondere Trimethoxysilan, Triethoxysilan, Methyldiethoxysilan, Methyldimethoxysilan und Phenyldimethoxysilan.

Werden die Organosilicium-Endgruppen durch ein Monomer an die Acrylat-Komponente gebunden, so eignen sich als Monomer insbesondere 3-(Meth)acryloxypropyltrimethoxysilan, 3-(Meth)acryloxypropylmethyldimethoxysilan, 3-(Meth)acryloxypropyltriethoxysilan, 3-(Meth)acryloxypropylmethyldiethoxysilan, (Meth)acryloxymethyltrimethoxysilan, (Meth)acryloxymethyl-methyldimethoxysilan, (Meth)acryloxymethyltriethoxysilan und (Meth)acryloxymethyl-methyldiethoxysilan.

Die erfindungsgemäßen organischen Prepolymere P mit Organosilicium-Endgruppen auf Basis von Acrylaten besitzen bevorzugt ein gewichtsmittleres Molekulargewicht zwischen 500 und 200000 g/mol, besonders bevorzugt zwischen 5000 und 100000 g/mol.

Es kann sich bei dem Grundgerüst der organischen Prepolymeren P ganz besonders bevorzugt auch um Polyether handeln. Seit einiger Zeit sind beispielsweise Kleber auf dem Markt, welche sogenanntes MS-Polymer^{®} der Kaneka Corp. und/oder Excestar der Asahi Glass Chemical Corp. enthalten, wobei "MS" für "modified silicone" steht. Diese Alkoxysilan-terminierten Polyether sind für die vorliegende Erfindung besonders geeignet. Es handelt sich dabei um Polymere, welche aus Polyetherketten mit Alkoxysilan-Endgruppen bestehen, hergestellt durch die Hydrosilylierung von endständigen Doppelbindungen. Die Alkoxysilan-Endgruppen bestehen aus einem an die Polyetherkette gebundenen Silizium, an welches zwei Alkoxygruppen und eine Alkylgruppe bzw. drei Alkoxgruppen gebunden sind.

Als Polyetherkomponente eignen sich unter anderem die unter Verwendung von Startermolekülen hergestellten Polyole aus Styroloxid, Propylenoxid, Butylenoxid, Tetrahydrofuran oder Epichlorhydrin. Insbesondere geeignet sind Polypropylenoxid, Polybutylenoxid, Polyethylenoxid und Tetrahydrofuran oder deren Mischungen. Hierbei sind insbesondere Molekulargewichte zwischen 500 und 100000 g/mol, besonders 3000 und 20000 g/mol bevorzugt.

Zur Einführung der Doppelbindungen wird der Polyether mit organischen Verbindungen enthaltend ein Halogenatom ausgewählt aus der Gruppe Chlor, Brom oder Jod sowie einer endständigen Doppelbindung umgesetzt. Insbesondere eignen sich hierfür Allylchloride, Allylbromide, Vinyl(chloromethyl)benzol, Allyl(chloromethyl)benzol, Allyl(bromomethyl)benzol, Allyl(chloromethyl)ether, Allyl(chloromethoxy)benzol, Butenyl(chloromethyl)ether, 1,6-Vinyl(chloromethoxy)benzol, wobei insbesondere Allylchlorid bevorzugt eingesetzt wird.

Die so erhaltenen Polyether mit endständigen Doppelbindungen werden durch Hydrosilylierung zu Polyethern mit Alkoxysilan-Endgruppen umgesetzt. Als Hydrosilylierungsmittel eignen sich hierbei insbesondere Trimethoxysilan, Triethoxysilan, Methyldiethoxysilan, Methyldimethoxysilan und Phenyldimethoxysilan.

Ein besonders geeigneter Kleber ist das unter dem Markennamen PCI MS Parkettkleber PAR 365^{®} von der PCI Augsburg GmbH vermarktete Produkt, hierbei handelt es sich um einen Kleber auf Basis von MS-Polymer.

Der Kleber kann bevorzugt auch weitere Komponenten enthalten. Insbesondere handelt es sich um mindestens einen weiteren Inhaltsstoff aus der Reihe Hilfs- und Zusatzstoffe, Dispergiermittel, Filmbildehilfsmittel, Pigmente, Rheologiehilfsmittel, Wasserfänger, Haftvermittler, Katalysatoren, Weichmacher, Licht- und Alterungsschutzmittel, Flammschutzmittel und/oder Biozide.

Dies können insbesondere die folgenden Komponenten sein:
- Haftvermittler bspw. Epoxysilane, Anhydridosilane, Addukte von Silanen mit primären Aminosilanen, Ureidosilane, Aminosilane, Diaminosilane, sowie deren Analoga als Monomer oder Oligomer und Harnstoffsilane; z.B. Dynasylan AMEO, Dynasylan AMMO, Dynasylan DAMO-T, Dynasylan 1146, Dynasylan 1189, Silquest A-Link 15, Epoxidharze, Alkyltitanate, Titanchelate, aromatische Polyisocyanate, Phenolharze;
- Wasserfänger z. B. Vinyltriethoxysilan, Vinyltrimethoxysilan, α-funktionelle Silane wie N-(Silylmethyl)-O-methyl-carbamate, insbesondere N-(Methyldimethoxysilylmethyl)-O-methyl-carbamat, (Methacryloxymethyl)silane, Methoxymethylsilane, N-Phenyl-, N-Cyclohexyl- und N-Alkylsilane, Orthoameisensäureester, Calciumoxid oder Molekularsieb;

- Katalysatoren wie Bismut-organische Verbindungen oder Bismut-Komplexe. Als Metallkatalysatoren kommen weiterhin Titan-, Zirkon-, Zink-, Sn- und Lithiumkatalysatoren sowie Metallcarboxylate in Frage, wobei auch Kombinationen verschiedener Metallkatalysatoren eingesetzt werden können;
- Licht- und Alterungsschutzmittel, welche insbesondere als Stabilisatoren gegen Wärme, Licht und UV-Strahlung wirken, beispielsweise phenolische Antioxidanzien welche als Radikalfänger fungieren, wie 2,6-Di-tert-butyl-p-cresol, 2,6-Di-tert-butylphenol, 2,4-Dimethyl-6-tert-butylphenol, 2,2'-Methylene-bis(4-methyl-6-tert-butylphenol), 4,4'-Butyliden-bis(3-methyl-6-tert-butylphenol), 4,4'-Thio-bis(3-methyl-6-tert-butylphenol), 5-Tetrakis[methylene-3-(3,5-di-tert-butyl-4-hydroxyphenyl)propionat]methane und 1,1,3-Tris(2-methyl-4-hydroxy-5-tert-butylphenyl)butane und Antioxidanzien auf Basis von Aminen (beispielsweise Phenyl-β-naphthylamin, α-Naphthylamin, N,N'-Di-sec-butyl-p-phenylendiamin, Phenothiazin und N,N'-Diphenyl-p-phenylendiamine)
- Flammschutzmittel;
- Biozide, wie bspw. Algizide, oder das Pilzwachstum hemmende Substanzen;
- Füllstoffe, z. B. gemahlene oder gefällte Calciumcarbonate, welche ggf. mit Fettsäuren bzw. Fettsäurengemischen beschichtet sind, z.B. Stearate, insbesondere feinteiliges beschichtetes Calciumcarbonat, Ruße, insbesondere industriell hergestellte Ruße, Kaoline, Aluminiumoxide, Kieselsäuren, insbesondere hochdisperse Kieselsäure aus Pyrolyseprozessen, PVC-Pulver oder Hohlkugeln. Bevorzugte Füllstoffe sind Ruß, Calciumcarbonate, wie bspw. gefällte oder natürliche Kreidetypen wie Omyacarb^{®} der Fa. Omya, Ultra P-Flex^{®} der Fa. Specialty Minerals Inc, Socal^{®} U 1 S2, Socal^{®} 312, Winnofil^{®} 312 der Fa. Solvay, Hakuenka^{®} der Fa. Shiraishi, hochdisperse Kieselsäuren aus Pyrolyseprozessen sowie Kombinationen aus diesen Füllstoffen. Ebenfalls geeignet sind Mineralien wie Kieselerde, Talk, Calciumsulfat (Gips) in Form von Anhydrit, Halbhydrat oder Dihydrat, Quarzmehl, Kieselgel, gefälltes oder natürliches Bariumsulfat, Titandioxid, Zeolithe, Leucit, Kalifeldspat, Biotid, die Gruppe der Soro-, Cyclo-, Ino-, Phyllo- und Hectosilicate, die Gruppe der schwerlöslichen Sulfate wie Gips, Anhydrit oder Schwerspat sowie Calciummineralien wie Calcit, pulverförmige Metalle (beispielsweise Aluminium, Zink oder Eisen) und Bariumsulfat;
- Rheologie-Modifizierer, wie bspw. Verdickungsmittel, z. B. Harnstoffverbindungen, Polyamidwachse, Bentonite, Silicone, Polysiloxane, hydriertes Rizinusöl, Metallseifen, wie Calciumstearat, Aluminumstearat, Bariumstearat, pyrogene Kieselsäure sowie Poly(oxy-1,2-ethandiyl)-a-hydro-α-hydroxy-polymer mit Oxy-1,2-ethandiyl-a -hydro-Ω-hydroxy-nonyl-phenoxyglycidylether Oligomeren und 5-Isocyanato-1-(isocyanatomethyl)-1,3,3-trimethylcyclohexan oder Hydroxyethylcellulose oder Polyacrylsäure-Polymere und Copolymere;
- Oberflächenaktive Substanzen wie bspw. Netzmittel, Verlaufsmittel, Entlüftungsmittel, Entschäumer und Dispergiermittel;
- Fasern, bspw. aus Kohlenstoff, Cellulose, Polyethylen oder Propylen;
- Pigmente, bspw. Titandioxid;
- Lösemittel wie etwa Wasser, aromatische Kohlenwasserstoffe wie Toluol und Xylol, Lösungsmittel auf Basis von Estern wie Ethylacetat, Butylacetat, Allylacetat und Celluloseacetat und Lösungsmittel auf Basis von Ketonen wie Methylethylketon, Methylisobutylketon und Diisobutylketon sowie Aceton, Alkoholen wie z. B. Isononylalkohol und Mischungen aus mindestens zwei der vorgenannten Lösungsmittel
sowie weitere Substanzen welche sich für den jeweiligen Einsatzzweck, insbesondere im Bereich der Klebstoffe, eignen.

Der Kleber kann weiterhin Weichmacher enthalten. Derartige Weichmacher werden bspw. in der WO 2008/027463 auf Seite 19, Zeile 5 bis Seite 20, Zeile 9 offenbart. Auf die WO 2008/027463 wird hiermit Bezug genommen und deren Inhalt wird hiermit in die Anmeldung aufgenommen.

Bei dem Parkettbelag kann es sich um Massivparket, insbesondere Stabparkett, Mosaikparkett, Lamparkett, Hochkantlamellenparkett, Parkettdielen, Massivdielen, Tafelparkett, insbesondere aus Eiche- oder Teakholz oder Mehrschichtparkett handeln.

Die flexible Abdichtungsbahn umfasst bevorzugt eine beidseitig vlieskaschierte Kunststofffolie. Bevorzugt ist eine Folie aus Polypropylen oder Polyethylen. Bevorzugt für die Kaschierung ist ein Glasfaser- und/oder Polyestervlies. Die Dicke der Folie beträgt bevorzugt 0,1 bis 1,5 mm, besonders bevorzugt 0,3 bis 0,7 mm. Insbesondere besteht die flexible Abdichtungsbahn aus einer beidseitig vlieskaschierten Kunststofffolie. Besonders geeignet ist das unter dem Markennamen PCI Pecilastic W^{®} von der PCI Augsburg GmbH vermarktete Produkt, hierbei handelt es sich um eine beidseitig mit Polyestervlies kaschierte Polyethylenfolie mit einer Schichtstärke von ca. 0,5 mm.

In einer bevorzugten Ausführungsform umfasst der Bodenaufbau im Boden-Wand-Übergangsbereich ein Dichtband. Insbesondere kann es sich hierbei um ein vlieskaschiertes Gummiband handeln. Besonders geeignet ist das unter dem Markennamen PCI Pecitape^{®} von der PCI Augsburg GmbH vermarktete Produkt, hierbei handelt es sich um ein beidseitig mit Vlies kaschiertes Spezial-Gummiband.

Mit der vorliegenden Erfindung konnte die gestellte Aufgabe in vollem Umfang gelöst werden. Der erfindungsgemäße Bodenaufbau gewährleistet zuverlässig den Schutz des Untergrundes vor eindringender Feuchtigkeit und damit Schäden in der Bausubstanz. Weiter wird ein guter Haftverbund zwischen dem Untergrund und dem Oberbelag Parkett erreicht, der eine Ablösung des Oberbelages zuverlässig verhindert. Es hat sich hierbei als besonders vorteilhaft herausgestellt, dass der Bodenaufbau innerhalb kürzester Zeit, insbesondere innerhalb von weniger als 2 Tagen erstellt und durch Gehverkehr belastet werden kann.

Eine bevorzugte Ausführungsform der Erfindung wird im Folgenden unter Bezugnahme auf die beigefügten Zeichnungen näher erläutert.

In den Zeichnungen zeigt
Figur 1 einen schematischen Querschnittschnitt eines erfindungsgemäßen Bodenaufbaus;
Figur 2 einen schematischen Querschnittschnitt eines erfindungsgemäßen Bodenaufbau mit Boden-Wand-Übergangsbereich.

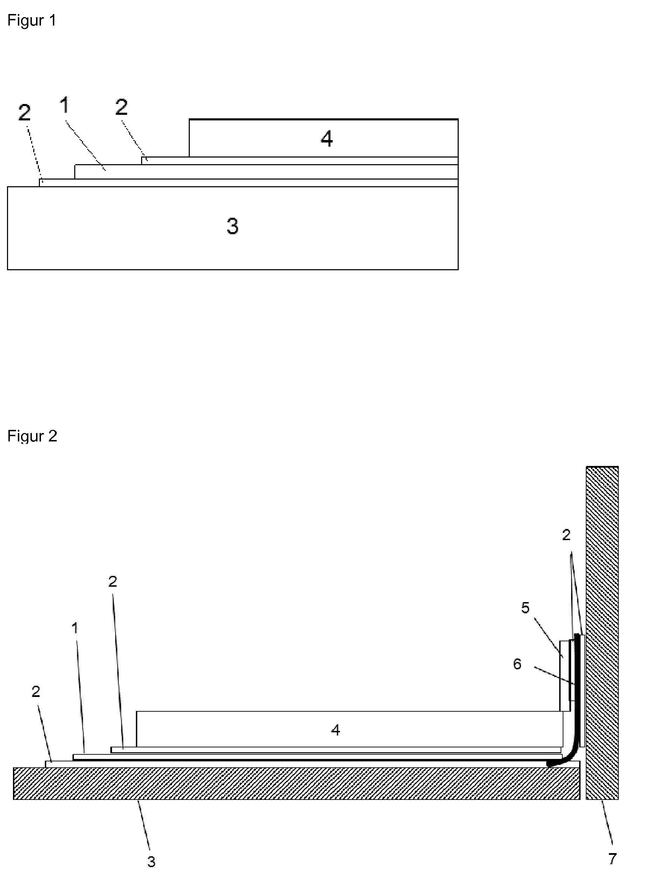

In Figur 1 ist ein erfindungsgemäßer Bodenaufbau dargestellt. Auf den Estrich 3 ist mit einem erfindungsgemäßen Kleber 2 eine flexible Abdichtungsbahn 1 fixiert. Das Parkett 4 ist wiederum durch einen erfindungsgemäßen Kleber mit der flexible Abdichtungsbahn 1 verbunden.

In Figur 2 ist ein erfindungsgemäßer Bodenaufbau mit Boden-Wand-Übergangsbereich dargestellt. Auf den Estrich 3 ist mit einem erfindungsgemäßen Kleber 2 eine flexible Abdichtungsbahn 1 fixiert. Das Parkett 4 ist wiederum durch einen erfindungsgemäßen Kleber mit der flexible Abdichtungsbahn 1 verbunden. Im Übergangsbereich Estrich 3 und Wand 7 ist der Bodenaufbau mit einem Dichtband 6 versehen, welches mit einem erfindungsgemäßen Kleber 2 an der Wand 7 und dem Estrich 3 befestigt ist. Die Stoßverklebung im Überlappungsbereich von Abdichtung 1 und Dichtband 6 besteht aus dem erfindungsgemäßen Kleber 2. Die Randleiste 5 ist wiederum über den erfindungsgemäßen Kleber 2 mit dem Dichtband 6 verbunden.

Die nachfolgenden Beispiele verdeutlichen die Vorteile der vorliegenden Erfindung.

### Beispiele

### Durchführung:

### Prüfung der Wasserdichtigkeit der Stoßverklebung:

Die Herstellung der Proben erfolgte in Anlehnung an Abschnitt 3.4.5 der "Prüfgrundsätze zur Erteilung eines allgemeinen bauaufsichtlichen Prüfzeugnisses für Abdichtungsstoffe im Verbund mit Fliesen- und Plattenbelägen - Teil 2: Bahnförmige Verbundabdichtungen" (Juni 2006). Der Kleber "PCI MS Parkettkleber PAR 365" der Fa. PCI Augsburg GmbH wurde gemäß den Produktinformationen mit einer Zahnspachtel B3 auf eine Bahn "PCI Pecilastic W" aufgebracht und eine zweite Bahn Pecilastic W mit einer Handrolle auf diese angerollt. Die Prüfung der Wasserdichtigkeit erfolgte in Anlehnung an die Prüfgrundsätze Abschnitt 3.4.5 an separaten Prüfkörpern nur an den Stoßverklebungen über 28 Tage mit einem Druck von 20 cm Wassersäule.
Ergebnis: Es wurde kein Wasseraustritt festgestellt.

### Prüfung der Haftzugfestigkeiten:

Die Herstellung der Proben erfolgte in Anlehnung an die Abschnitte 3.4.1 der "Prüfgrundsätze zur Erteilung eines allgemeinen bauaufsichtlichen Prüfzeugnisses für Abdichtungsstoffe im Verbund mit Fliesen- und Plattenbelägen - Teil 2: Bahnförmige Verbundabdichtungen" (Juni 2006). Der Kleber "MS Parkettkleber PAR 365" der Fa. PCI Augsburg GmbH wurde gemäß den Produktinformationen mit einer Zahnspachtel B3 auf Beton aufgebracht und eine Bahn "PCI Pecilastic W" mit einer Handrolle angerollt. Nach 1 Tag wurden wiederum mit "PCI MS Parkettkleber PAR 365" und mit einer Zahnspachtel B3 10 Platten aus Teakholz bzw. Eichenholz (ca. 5X5X1,8 cm) darauf verklebt. Die Lagerung der Prüfkörper erfolgte nach den Prüfgrundsätzen" Nasslagerung" und "Trockenlagerung".
Die Prüfung der Haftzugfestigkeiten erfolgte in Anlehnung der Prüfgrundsätze Abschnitt 3.4.1. Vor der Durchführung der Prüfung wurden die Abzugsflächen bis zum Untergrund allseitig eingeschnitten.

### Ergebnis:

### Teakholz

| Art der Prüfung | Prüfung nach Abschnitt | Prüfergebnis |
|---|---|---|
| Trockenfestigkeit | 3.4.1 | 0,4 N/mm² |
| Nassfestigkeit | 3.4.1 | 0,3 N/mm² |

### Eichenholz

| Art der Prüfung | Prüfung nach Abschnitt | Prüfergebnis |
|---|---|---|
| Trockenfestigkeit | 3.4.1 | 0,6 N/mm² |
| Nassfestigkeit | 3.4.1 | 0,2 N/mm² |

Die Ergebnisse zeigen, dass der erfindungsgemäße Bodenaufbau gute Haftzugwerte nach Trocken- und Nasslagerung sowie eine gute Wasserdichtigkeit selbst im Bereich der Stoßverklebung zeigt.

## Patentansprüche

1. Bodenaufbau umfassend
A) eine flexible Abdichtungsbahn,
B) einem Kleber auf Basis eines organischen Prepolymeren P mit mindestens zwei durch Wasser vernetzbaren Organosilicium-Endgruppen, der Formel (I),
-Y-R¹-Si(R³)ₙ(OR²)₃₋ₙ (I)
wobei
Y repräsentiert wird durch eine bivalente Bindegruppe,
R¹ repräsentiert wird durch eine divalente Kohlenwasserstoffeinheit mit 1 bis 10 Kohlenstoffatomen,
OR² gleich oder verschieden und unabhängig voneinander repräsentiert wird durch eine Alkoxygruppe, wobei R² eine Alkylgruppe mit 1 bis 10 Kohlenstoffatomen darstellt und/oder OR² eine Phenoxygruppe, eine Naphtyloxygruppe, eine Phenoxygruppe, welche an der ortho-, metha- und/oder para-Position substituiert ist, mit einer C₁-C₂₀ Alkyl-, Alkylaryl-, Alkoxy-, Phenyl-, substituierten Phenyl-, Thioalkyl-, Nitro-, Halogen-, Nitril-, Carboxyalkyl-, Carboxyamid-, -NH₂ und/oder NHR⁴-Gruppe, worin
R⁴ eine lineare, verzweigte oder zyklische C₁-C₂₀ Alkylgruppe darstellt,
R³ gleich oder verschieden und unabhängig voneinander repräsentiert wird durch eine Alkyl, Alkenyl, Arylen, Arylalkyl oder Alkylaryl mit jeweils 1 bis 15 Kohlenstoffatomen, wobei die Reste Sauerstoff- und/oder Schwefel- und/oder Stickstoffatome enthalten können,
n repräsentiert wird durch 0, 1 oder 2, und
C) einen Parkettbelag.

2. Bodenaufbau nach Anspruch 1, **dadurch gekennzeichnet, dass** es sich bei dem organischen Prepolymeren P um mindestens eine Polymerverbindung auf Basis von Acrylaten, Polyurethanen, Polyharnstoffen, Polyethern und Polyestern handelt.

3. Bodenaufbau nach Anspruch 1, **dadurch gekennzeichnet, dass** es sich bei dem organischen Prepolymeren P um Polyether handelt.

4. Bodenaufbau nach einem der Ansprüche 1 bis 3, **dadurch gekennzeichnet, dass** Y repräsentiert wird durch -N(C=O)-, -NR-, -NH-, -O-, -S- oder Organopolysiloxan.

5. Bodenaufbau nach Anspruch 4, **dadurch gekennzeichnet, dass** R repräsentiert wird durch eine Alkylgruppe oder Arylgruppe mit ein bis 20 Kohlenstoffatomen.

6. Bodenaufbau nach einem der Ansprüche 1 bis 5, **dadurch gekennzeichnet, dass** n repräsentiert wird durch 0 oder 1.

7. Bodenaufbau nach einem der Ansprüche 1 bis 6, **dadurch gekennzeichnet, dass** der Kleber mindestens einen weiteren Inhaltsstoff aus der Reihe Hilfs- und Zusatzstoffe, Dispergiermittel, Filmbildehilfsmittel, Pigmente, Rheologiehilfsmittel, Wasserfänger, Haftvermittler, Katalysatoren, Weichmacher, Licht- und Alterungsschutzmittel, Flammschutzmittel und/oder Biozide umfasst.

8. Bodenaufbau nach einem der Ansprüche 1 bis 3, **dadurch gekennzeichnet, dass** es sich bei dem Parkettbelag um Massivparkett oder Mehrschichtparkett handelt.

9. Bodenaufbau nach einem der Ansprüche 1 bis 8, **dadurch gekennzeichnet, dass** die flexible Abdichtungsbahn eine beidseitig vlieskaschierte Kunststofffolie umfasst.

10. Bodenaufbau nach Anspruch 9, **dadurch gekennzeichnet, dass** es sich bei der Kunststofffolie um Polypropylen oder Polyethylen handelt.

11. Bodenaufbau nach Anspruch 9 oder 10, **dadurch gekennzeichnet, dass** es sich bei dem Vlies um ein Glasfaser- und/oder Polyestervlies handelt.

12. Bodenaufbau nach einem der Ansprüche 9 bis 11, **dadurch gekennzeichnet, dass** die Kunststofffolie eine Dicke von 0,1 bis 1,5 mm aufweist.

13. Bodenaufbau nach einem der Ansprüche 1 bis 12, **dadurch gekennzeichnet, dass** der Bodenaufbau im Boden-Wand-Übergangsbereich ein Dichtband umfasst.
